# EUROPÄISCHE PATENTSCHRIFT

(11) **EP 0 457 020 B1**
(45) Veröffentlichungstag und Bekanntmachung des Hinweises auf die Patenterteilung: **29.06.1994**
(21) Anmeldenummer: 91105649.7
(22) Anmeldetag: 10.04.1991
(51) Int. Cl.: F16C 33/46, F16C 33/56

(54) **Käfig für ein Grosswälzlager**
Cage for a large rolling bearing
Cage pour roulement de grande dimension

(30) Priorität: 12.05.1990 DE 4015303
(43) Veröffentlichungstag der Anmeldung: 21.11.1991
(73) Patentinhaber: Fried. Krupp AG Hoesch-Krupp, 44145 Dortmund (DE)
(72) Erfinder: Stenert, Alois, Dipl.-Ing., W-4780 Lippstadt (DE)

(56) Entgegenhaltungen:
- DE-A- 1 525 153
- DE-B- 1 007 570
- DE-B- 1 133 950
- DE-U- 7 213 160
- DE-U- 8 908 581
- GB-A- 2 102 513
- US-A- 4 413 866

## Beschreibung

Die Erfindung betrifft einen Käfig für ein Großwälzlager nach dem Oberbegriff des Anspruchs 1.

Derartige Käfige dienen dazu, die Wälzkörper gegenüber den Laufbahnen von Wälzlagern in ihrer Lage zueinander und zum Lagersystem zu positionieren und zu halten. Weiterhin dienen sie dazu, Kontakt zwischen einzelnen Wälzkörpern zu vermeiden.

Nach der U 7 213 160 ist es bekannt, derartige Käfige als Zweistoff-Fensterkäfige auszubilden. Diese Käfige bestehen aus einem Metallband mit Ausnehmungen, in die jeweils Kunststoffenster eingesetzt werden. Die Kunststoffenster weisen einen Kragen auf, der an der Oberfläche des Metallbandes anliegt. Derartige Käfige besitzen den Nachteil, daß sie bei großen Wälzlagern und für den Einsatz in axialen Laufbahnen eine zusätzliche Führung benötigen, die dazu dient, das Metallband im Laufsystem zu führen. Üblicher Weise werden insbesondere beim Einsatz in Großwälzlagern hierzu Gleitstücke aus Metall am Metallband eingesetzt (siehe z.B. US-A-4 413 866).

Der Erfindung liegt die Aufgabe zugrunde, einen Käfig für ein Großwälzlager derart weiterzubilden, daß Gleitstücke entfallen können und trotzdem eine sichere Führung des Käfigs im Lagersystem gewährleistet ist.

Diese Aufgabe wird erfindungsgemäß durch die kennzeichnenden Merkmale des Anspruchs 1 gelöst. Vorteilhafte Ausbildungen sind in den Ansprüchen 2 bis 5 beschrieben.

Die mit der Erfindung erzielten Vorteile bestehen insbesondere darin, daß der erfindungsgemäße Käfig für ein Großwälzlager in einfacher Bauweise mit wenig Bauteilen hergestellt werden kann. Trotzdem ist eine sichere Führung des Käfigs im Laufsystem des Lagers gewährleistet. Vorteilhaft gegenüber der Ausbildung mit Gleitstücken müssen die Gegenflächen an den Lagerringen, gegen die sich der Käfig abstützt, nicht mehr gehärtet werden. Darüber hinaus können nach Verschleiß des Käfigs die Kunststoffenster ausgewechselt werden, wobei das teuere Metallband vorteilhaft weiterverwendbar ist. Bei der Ausbildung mit den Merkmalen nach Anspruch 5 kann der Kunststoffkäfig in beliebigen sinnvollen Positionen in das Metallband eingesetzt werden.

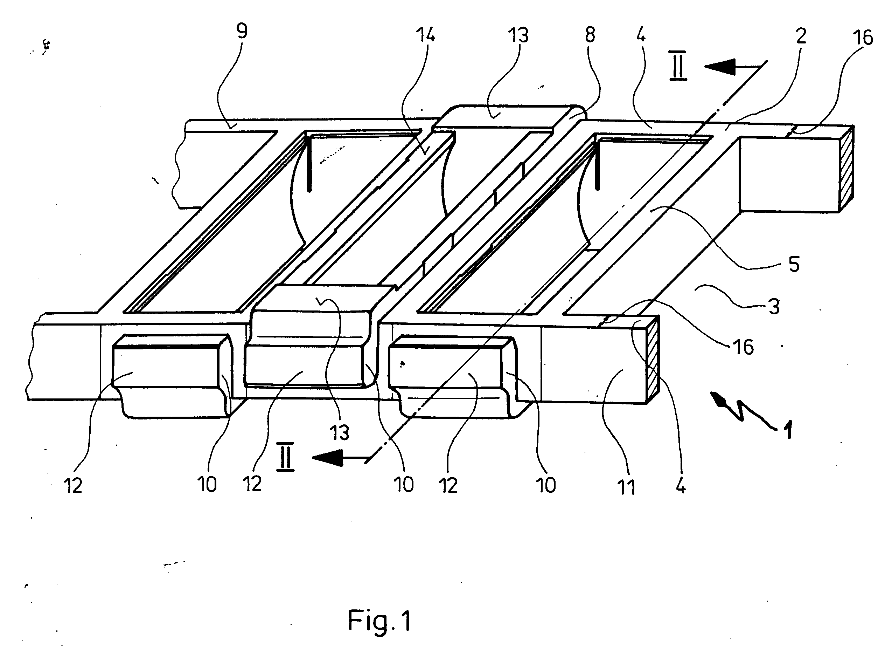

Ein Ausführungsbeispiel der Erfindung ist in der Zeichnung dargestellt und wird im folgenden näher beschrieben. Es Zeigen
Figur 1 einen Abschnitt des erfindungsgemäßen Käfigs,
Figur 2 einen Schnitt II - II durch den Käfig nach Figur 1 und
Figur 3 einen Schnitt III - III durch das Kunststoffenster nach Figur 2.

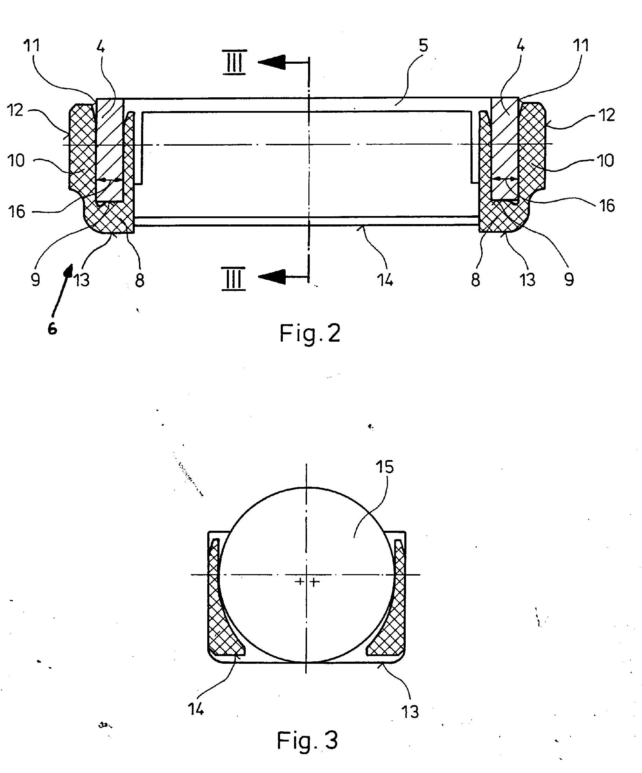

Der Käfig 1 für ein Großwälzlager besteht aus einem Metallband 2, das mit Ausnehmungen 3 versehen ist. Die Ausnehmungen sind rechteckig ausgebildet. Dadurch ergeben sich am Metallband Seitenstege 4 und Zwischenstege 5. In die Ausnehmungen 3 sind Kunststoffenster 6 eingesetzt. Diese Kunststoffenster besitzen Innenwände, die umlaufend in die Ausnehmung eingreifen. An die Innenwände schließen sich Kragen 8 an, die im Ausführungsbeispiel die Seitenstege 4 übergreifen und an der Oberfläche 9 des Metallbandes 2 anliegen. In gleicher Weise können auch Kragen an den Kunststoffenstern 6 angeordnet sein, die die Zwischenstege 5 ganz oder teilweise übergreifen. Seitlich an den Kragen 8, die Seitenstege 4 übergreifend, sind am Kunststoffenster 6 Führungsborde 10 angeordnet, die sich gegen die Außenflächen 11 der Seitenstege 4 abstützen. Um zu erreichen, daß die Kunststofffenster für Käfige unterschiedlichen Durchmessers einsetzbar sind, sind die am Führungsbord 10 außen angeordneten Anlaufflächen 12 ballig ausgebildet. Die auf den Seitenstegen 4 aufliegenden Kragen 8 weisen eine Führungsfläche 13 auf, die die mittige Oberfläche 14 überragt. Dadurch wird erreicht, daß der Käfig sich nicht auf der eigentlichen Laufbahn für die Wälzkörper 15 abstützt. Im Ausführungsbeispiel sind die Kunststoffenster abwechselnd von beiden Seiten in die Ausnehmung des Metallbandes eingesetzt. Je nach Erfordernissen und Funktion des Lagers ist es jedoch auch möglich, daß alle Kunststoffenster von einer Seite eingesetzt werden oder in einer beliebigen Konfiguration, beispielsweise zwei Fenster von unten, ein Fenster von oben, montiert werden. Die Führung des Käfigs muß nicht ausschließlich durch die Führungsflächen 13 und Anlaufflächen 12 der Kunststoffenster vorgenommen werden. Es kann darüber hinaus oder ausschließlich eine übliche Wälzkörperführung vorgesehen werden. In Figur 3 ist erkennbar, daß das Kunststoffenster 6 über die halbe Höhe des zu führenden Wälzkörpers 15 nach innen verdickt der Oberfläche des Wälzkörpers angepaßt ist. Der Seitensteg hat eine gleichbleibende Dicke 16. Damit erhält die Außen- und Innenfläche eines Axialkäfigs die Form eines Vielecks. Der Käfig kann in bekannter Weise ein- oder mehrteilig ausgebildet sein. Bei mehrteiliger Ausbildung ist eine Trennung an den Zwischenstegen zu empfehlen. Die Kunststoffenster 6 werden so ausgebildet, daß sie federnd nachgiebig in die Ausnehmungen 3 des Metallbandes 2 eingesetzt werden. Abrundungen an den Kanten der Kunststoffenster 6 stellen sicher, daß bei der Gleitbewegung die erforderliche Schmierung der Wälzelemente sichergestellt bleibt und der Schmierfilm nicht unterbrochen wird. Das Kunststoffenster (6) ist bezüglich der Ebenen (II - II) und (III - III) symmetrisch ausgebildet. Das Kunststoffenster (6) kann mit einem Grundwerkzeug für ähnliche Wälzkörperabmessungen mit gleichen Außenmaßen hergestellt werden. Beispielsweise für den alternativen Einsatz von Langrollen oder Doppelrollen wird dieses vorgesehen.
- 1: Käfig
- 2: Metallband
- 3: Ausnehmung
- 4: Seitensteg
- 5: Zwischensteg
- 6: Kunststoffenster
- 7: Innenwand
- 8: Kragen
- 9: Oberfläche
- 10: Führungsbord
- 11: Außenfläche
- 12: Anlauffläche
- 13: Führungsfläche
- 14: mittige Oberfläche
- 15: Wälzkörper
- 16: Wanddicke

## Patentansprüche

1. Mehrteiliger Käfig (1) für ein Großwälzlager, der die Wälzkörper (15) formschlüssig mit einem Abstand umfaßt, bestehend aus einem Metallband (2) mit Seitenstege (4) und Zwischenstege (5) bildenden Ausnehmungen (3) und in diese eingesetzte Kunststoffenster (6), die in die zugehörigen Ausnehmungen (3) eingreifen, mit an der Oberfläche (9) des Metallbandes (2) anliegenden Kragen (8) und wenigstens einem, am Kragen angeordneten und den Seitensteg (4) nach außen übergreifenden Führungsbord (10), dadurch gekennzeichnet, daß der Führungsbord (10) und der Kragen (8) zur Führung des Käfigs (1) an den Lagerringen verdickte Bereiche mit Anlaufflächen (12) bzw. Führungsflächen (13) besitzen und die seitlichen Anlaufflächen (12) sich nicht über die gesamte Höhe des Fensters (6) erstrecken und in der Höhe der Rollenachse angeordnet sind.

2. Käfig nach Anspruch 1, dadurch gekennzeichnet, daß der Führungsbord (10) eine Anlauffläche (12) aufweist, die konvex ausgebildet ist.

3. Käfig nach Anspruch 1 oder Anspruch 2, dadurch gekennzeichnet, daß die Innenform des Kunststoffensters (6) über die halbe Höhe des zu führenden Wälzkörpers (15) einen freien Durchtritt entsprechend der größten Ausmaße des Wälzkörpers aufweist und über die weitere Höhe nach innen verdickt der Oberfläche des Wälzkörpers (15) angepaßt ist.

4. Käfig nach einem oder mehreren der Ansprüche 1 bis 3, dadurch gekennzeichnet, daß die an den Seitenstegen (4) anliegenden Kragen (8) eine Führungsfläche (13) aufweisen, die die mittige Oberfläche (14) des Kunststoffensters in der Höhe (6) überragen.

5. Käfig nach einem oder mehreren der Ansprüche 1 bis 4, dadurch gekennzeichnet, daß das Kunststoffenster (6) bezüglich seines Querschnittes und/oder seines Längsschnittes symmetrisch ausgebildet ist.

## Claims

1. Multi-part cage (1) for a large rolling bearing, which surrounds the rolling bodies (15) in a form-locking manner with a clearance, consisting of a metal strip (2) having openings (3) forming side bars (4) and intermediate bars (5), and synthetic windows (6) which are inserted into these and engage in the associated openings (3), having collars (8) lying at the surface (9) of the metal strip (2) and at least one guide edge (10) disposed at the collar and overlapping the side bar (4) on the outside, characterised in that for the purpose of guiding the cage (1) the guide edge (10) and the collar (8) have thickened regions having butting surfaces (12) or guide surfaces (13) at the bearing rings and the side butting surfaces (12) do not extend over the entire height of the window (6) and are disposed at the height of the rolling axis.

2. Cage as claimed in claim 1, characterised in that the guide edge (10) comprises a butting surface (12), which is formed in a convex shape.

3. Cage as claimed in claim 1 or claim 2, characterised in that the inner form of the synthetic window (6) comprises, over half the height of the rolling body (15) to be guided, a free through-way corresponding to the largest over-all measurement of the rolling body and, over the further height, being thickened on the inside, is adapted to the surface of the rolling body (15).

4. Cage as claimed in one or several of claims 1 to 3, characterised in that the collars (8) lying at the side bars (4) comprise a guide surface (13), which overlie the middle surface (14) of the synthetic window at the height (6).

5. Cage as claimed in one or several of claims 1 to 4, characterised in that the synthetic window (6) is symmetrically formed with respect to its cross-sectional area and/or its longitudinal sectional area.

## Revendications

1. Cage (1) en plusieurs parties, pour couronne d'orientation, qui entoure et maintient mécaniquement, avec un écartement, les corps de roulement (15), consistant en une bande métallique (2) avec des évidements (3) présentant des ailes latérales (4) et des entretoises (5), et des fenêtres (6) en matière synthétique placées dans ceux-ci, qui s'insèrent dans les évidements (3) correspondants avec un collet (8) reposant sur la surface (9) de la bande métallique (2) et au moins une bordure de guidage (10) formée sur le collet et qui déborde à l'extérieur de l'aile latérale (4) caractérisée en ce que la bordure de guidage (10) et le collet (8) possèdent des zones épaissies avec des surfaces portantes (12), respectivement des surfaces de guidage (13), pour guider la cage (1) sur les bagues de roulement, et les surfaces portantes latérales (12) ne s'étendent pas sur toute la hauteur de la fenêtre (6) et sont disposées à hauteur de l'axe de roulement.

2. Cage selon la revendication 1, caractérisée en ce que la bordure de guidage (10) présente une surface portante (12) qui est réalisée sous une forme convexe.

3. Cage selon la revendication 1 ou la revendication 2, caractérisée en ce que la forme interne de la fenêtre en matériau synthétique (6) présente, sur la moitié de la hauteur du corps de roulement (15) à guider, un passage libre correspondant à la plus grande dimension externe du corps de roulement et, épaissie vers l'intérieur sur le reste de la hauteur, est adaptée à la surface du corps de roulement (15).

4. Cage selon une ou plusieurs des revendications 1 à 3, caractérisée en ce que les collets (8) reposant sur les ailes latérales (4) présentent une surface de guidage (13) qui déborde dans le sens de la hauteur de la surface médiane (14) de la fenêtre en matériau synthétique (6).

5. Cage selon une ou plusieurs des revendications 1 à 4, caractérisée en ce que la fenêtre en matériau synthétique (6) est réalisée de manière à être symétrique par rapport à son plan de coupe transversal et/ou son plan de coupe longitudinal.
